# EUROPÄISCHE PATENTANMELDUNG

(11) **EP 3 838 566 A1**
(43) Veröffentlichungstag der Anmeldung: **23.06.2021**
(21) Anmeldenummer: 19216441.6
(22) Anmeldetag: 16.12.2019
(51) Int. Cl.: B29C 65/48, B29C 65/00

(54) **VERFAHREN ZUM SCHWEISSEN VON KUNSTSTOFFEN MIT REDUZIERTEM ABDRUCKEFFEKT**

(71) Anmelder: Henkel AG & Co. KGaA, 40589 Düsseldorf (DE)
(72) Erfinder: Luetzen, Hendrik, 40629 Duesseldorf (DE); Walter, Pablo, 50735 Cologne (DE); Haertig, Thomas, 80992 München (DE); Friedrich, Norman, 40225 Duesseldorf (DE); Kasper, Dirk, 40597 Düsseldorf (DE); Klug, Christian, 40597 Düsseldorf (DE)

(57) **Zusammenfassung**

Verfahren zum Verschweißen von zwei Kunststoffbauteilen, wobei ein erstes flächiges Kunststoffbauteil auf einer der flächigen Seiten mit einem zweiten Kunststoffbauteil unter Verwendung eines Welding Agents verschweißt wird, wobei der Welding Agent mindestens ein Polymer enthält, welches keinen höheren Schmelzpunkt als die zu verschweißenden Kunststoffbauteile aufweist.

## Beschreibung

Die vorliegende Erfindung bezieht sich auf ein Verfahren zum Verschweißen von zwei Kunststoffbauteilen, wobei ein erstes flächiges Kunststoffbauteil auf einer der flächigen Seiten mit einem zweiten Kunststoffbauteil unter Verwendung eines Welding Agents verschweißt wird, wobei der Welding Agent mindestens ein Polymer enthält, welches keinen höheren Schmelzpunkt als die zu verschweißenden Kunststoffbauteile aufweist.

Beim Schweißen von Kunststoffen oder Anspritzen von Kunststoff an dünnwandige Bauteile kommt es häufig zu Abzeichnungen auf der Rückseite der dünnwandigen Bauteile. Ein Beispiel hierfür sind angespritzte Versteifungen in Form von Rippen (Verrippung), bei denen auf der Rückseite der flächigen Bauteile, an denen die Versteifungen angespritzt werden, meist eine deutliche Abzeichnung an der Stelle der Anspritzung zu erkennen ist. Diese Abzeichnung hat die Form bzw. Kontur der Anspritzungen. Diese Erscheinung wird auch als Abdruckeffekt bezeichnet.

In vielen Fällen ist dieser Abdruckeffekt unproblematisch, aber auf sichtbaren Bauteilen sind solche Abdrücke in der Regel unerwünscht und führen in Extremfall zum Ausschuss von Bauteilen. Insbesondere in der Automobilindustrie, z.B. bei der Fertigung von Armaturenbrettern oder Stoßstangen mit integrierten Sensoren, ist dies ein bedeutendes Problem, da es in diesem Feld nicht nur auf einzuhaltende physikalische Eigenschaften, wie Festigkeit, ankommt, sondern die Ästhetik eine entscheidende Rolle spielt.

Wird die Verrippung auf die Fläche des Bauteils durch ein gängiges Schweißverfahren gefügt, kann es ebenfalls bzw. sogar verstärkt zu Einfallstellen kommen, da durch den Schweißprozess zusätzlich ein Wärmeeintrag erfolgt. Das Material wird geschmolzen und anschließend rekristallisiert oder relaxiert es, was zu einem Abdruckeffekt führen kann. Je nach verwendetem Schweißverfahren erfolgt häufig eine teilweise Durchwärmung des Bauteils, die sich auf der Rückseite als Einfallstelle abzeichnet. Dies ist besonders bei dünnen Wandstärken zu erwarten, so dass häufig Mindestwandstärken von flachen Bauteilen nötig sind, um einem Abdruckeffekt vorzugbeugen. Dies führt jedoch zu einem großen Materialeinsatz und damit zu höheren Bauteilkosten und einem höheren Bauteilgewicht, auch wenn die mechanischen Eigenschaften dünnere Wandstärken erlauben würden oder sogar erfordern. So sind zum Beispiel im Bereich von Autoarmaturenbrettern mit angefügten Airbags dünnere Wandstärken von besonderem Vorteil.

Besonders auf Hochglanz-lackierten Oberflächen, wie Stoßstangen, sind die Abzeichnungen bei einem bestimmten Blickwinkel und Einfallwinkel des reflektierenden Lichts bereits bei sehr geringem Abdruckeffekt, der sich durchaus im Nanometerbereich bewegen kann, deutlich sichtbar und ggf. fühlbar. Dabei ist der Abdruckeffekt häufig bereits direkt nach der Bauteilfertigung bzw. nach dem Schweißprozess sichtbar, kann sich jedoch auch noch nach einer Alterung, thermische Relaxation oder mechanische Belastung erst ausbilden oder verstärken.

Technisch wurde versucht, die Abdruckeffekte durch Masseanhäufungen im Spritzgussprozess zu vermindern oder sogar ganz zu vermeiden. Dabei wurde in der Spritzgussform an den Stellen eine Masseanhäufung vorgesehen, an denen später eine Verrippung vorgesehen ist. Durch den Einfall der Masseanhäufung bei der Herstellung soll so eine glatte Oberfläche gebildet werden. Hierdurch wird zum einen das Design der Spritzgussform sehr komplex und aufwendig und zum anderen muss das anschließende Fügeverfahren hinsichtlich der Parameter sehr genau angepasst werden, damit der Einfall der Masseanhäufung immer gleichmäßig geschieht. Aufgrund der sensiblen Einstellung der Parameter führt dieses Verfahren ebenfalls häufig zu einem hohen Ausschuss. Zudem ist dieses Verfahren auf den Spritzguss limitiert und kann kaum bei nachträglichem Anbringen, z.B. rückseitiger Verrippungen oder anderer Strukturen, genutzt werden.

Zur Minimierung der Abdruckeffekte kann auch ein spezielles Ultraschallschweißverfahren mittels einer sogenannten Fakirsonotrode, wie beschrieben in DE10160496, eingesetzt werden. Durch die Form der Fakirsonotrode und die daraus resultierenden Energieausrichtung des Ultraschalls kann der Abdruckeffekt auf der Bauteilrückseite reduziert werden. Die Fakirsonotrode durchdringt dazu das anzuschweißende Fügeteil und zum Teil die Fügefläche und erzeugt eine punktartige Verschweißung mit wenig Tiefeneintrag der Ultraschallenergie. Nachteilig an dieser Methode ist, dass die Bauteile eine spezielle Geometrie aufweisen müssen. Für Verrippungen oder dem an Schweißen von Haltevorrichtungen für Airbags ist diese Schweißmethode ungeeignet. Außerdem wird bei geringer Schweißenergie lediglich eine punktförmige Verschweißung in Form der nadelförmigen Sonotrodenpunkte erhalten, durch die punktförmige Verschweißung ist zudem eine größere Fläche für eine stabile Verschweißung notwendig und das Bauteil kann durch diese Punkte zusätzlich geschwächt werden.

Die Aufgabe der vorliegenden Erfindung bestand somit darin, ein einfaches Verfahren zum Verschweißen von Kunststoffbauteilen zu finden, welches zum einen hinsichtlich der Festigkeit und Güte der entstandenen Verbindung hervorragende Eigenschaften aufweist, aber gleichzeitig keinen oder nur einen sehr geringen Abdruckeffekt zeigt. Dieses Verfahren sollte insbesondere in der Automobilindustrie, z.B. bei der Fertigung von Armaturenbrettern oder Stoßstangen mit integrierten Sensoren, einsetzbar sein.

Überraschenderweise wurde gefunden, dass diese Aufgabe durch ein Verfahren zum Verschweißen von Kunststoffbauteilen gelöst wurde, wobei ein erstes flächiges Kunststoffbauteil auf einer der flächigen Seiten mit einem zweiten Kunststoffbauteil unter Verwendung eines Welding Agents verschweißt wird, wobei der Welding Agent mindestens ein Polymer enthält, welches keinen höheren Schmelzpunkt als die zu verschweißenden Kunststoffbauteile aufweist.

Somit ist ein erster Gegenstand der Erfindung ein Verfahren zum Verschweißen von zwei Kunststoffbauteilen, insbesondere zur Minimierung des Abdruckeffekts, wobei ein erstes flächiges Kunststoffbauteil unter Verwendung eines Welding Agents auf einer der flächigen Seiten mit einem zweiten Kunststoffbauteil verschweißt wird, wobei der Welding Agent keinen höheren Schmelzpunkt als die zu verschweißenden Kunststoffbauteile aufweist.

Durch die Verwendung des Welding Agents, der keinen höheren Schmelzpunkt, bevorzugt einen geringeren Schmelzpunkt als die zu verschweißenden Kunststoffbauteile aufweist, muss während des Schweißvorgangs weniger Energie in die zu verschweißenden Verbindung bzw. in die zu verschweißenden Kunststoffbauteile eingebracht werden, da der Welding Agent diese Energie aufnimmt, so dass sowohl durch das zusätzliche Material des Welding Agents als auch durch die Verringerung der eingebrachten Energie in die zu verschweißenden Bauteile insgesamt der Abdruckeffekt deutlich verringert werden kann bzw. komplett vermieden werden kann.

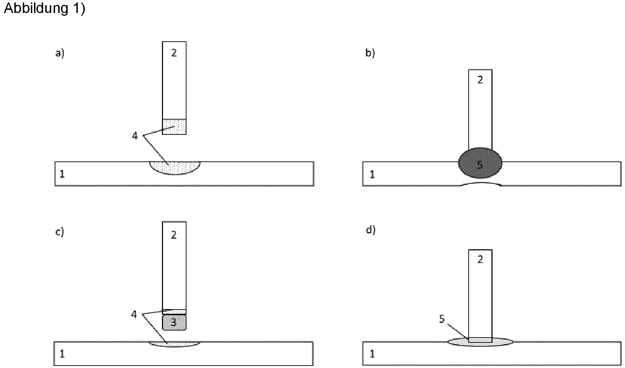

Zur beispielhaften Demonstration wird in der Abbildung 1 die Verschweißung mit und ohne eines Welding Agents schematisch dargestellt.:

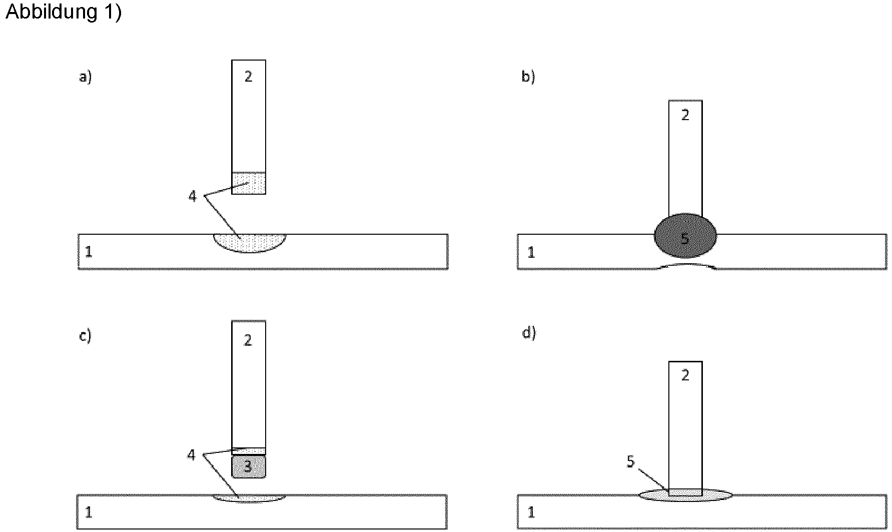

In der Abbildung 1a) wird das flächige Kunststoffbauteil (1) und das damit zu verschweißende zweite Kunststoffbauteil (2) unmittelbar vor der Infrarot-Verschweißung dargestellt. Das zweite Kunststoffbauteil (2), welches auf einer der flächigen Seiten des ersten Kunststoffbauteils (1) verschweißt wird (hier in senkrechter bzw. orthogonaler Anordnung), und die entsprechende Stelle der zu verschweißenden Fläche des ersten Kunstbauteils (1) sind für die Verschweißung mittels Infrarot angeschmolzen (dargestellt durch die markierten Flächen (4)). Damit eine stabile Verbindung entsteht muss ausreichend Energie eingebracht werden, wodurch größere Bereiche der zu fügenden Bauteile angeschmolzen werden.

Nach dem Fügen und Abkühlen, dargestellt in Abbildung 1b), bleibt eine Fügezone (5) zurück, die rekristallisiert und/oder relaxiert. Dadurch, dass ein großer Bereich mit einer hohen Eindringtiefe aufgeschmolzen wurde, bildet sich anschließend auf der zu verschweißenden gegenüberliegenden Seite eine Vertiefung, erkennbar als Abdruck.

In der Abbildung 1c) wird das flächige Kunststoffbauteil (1) und das damit zu verschweißende zweite Kunststoffbauteil (2) unmittelbar vor der Infrarot-Verschweißung mit einem Welding Agent (3) dargestellt, hier in der bevorzugten Ausführung einer T-förmigen Verschweißung. Das zweite Kunststoffbauteil (2), die entsprechende Stelle der zu verschweißenden Fläche des ersten Kunstbauteils (1) und der Welding Agent (3) sind für die Verschweißung mittels Infrarot angeschmolzen. Durch die Verwendung des Welding Agents werden jedoch die beiden zu fügenden Kunststoffbauteile nur geringfügig angeschmolzen. Durch die Verwendung des Welding Agents kann dennoch eine ausreichend stabile Verbindung entstehen.

Nach dem Fügen und Abkühlen, dargestellt in Abbildung 1d), wird die Fügezone (5) durch den Welding Agent und das Bauteilmateial gebildet, wobei die Fügezone hauptsächlich durch den Welding Agent gebildet wird und eine stoffschlüssige Verbindung gebildet wird. Durch den geringen Energieeintrag in die Bauteile und die damit geringe Rekristallisation und Relaxation in dem Bauteil, bildet sich anschließend auf der zu verschweißenden gegenüberliegenden Seite keine Vertiefung, so dass auch kein Abdruck erkennbar ist.

Ein wichtiger Punkt beim erfindungsgemäßen Verfahren ist die Geometrie, sowohl der Fügeteile selbst auch der Fügeteile zueinander.

Das erste Kunststoffbauteil ist ein flächiges Kunststoffbauteil. "flächig" bedeutet dabei, dass das Bauteil eine zweidimensionale Ausbreitung aufweist. Die Länge und Breite eines flächigen Bauteils sind größer als die Dicke des Bauteils. Bevorzugt ist die Länge und/oder Breite, insbesondere die Länge und Breite des flächigen Bauteils mindestens 5mal, insbesondere mindestens 10mal, bevorzugt mindestens 50mal so groß wie Dicke des Bauteils. Dabei kann das flächige Bauteil planar sein, aber auch andere Geometiren aufweisen, wie wellenförmig, gebogen oder halbkugelförmig. Beispielhaft genannt sei ein gewölbtes Armaturenbrett mit einer Länge von 500 mm, einer Breite von 200 mm und einer Dicke von 3 mm.

Bevorzugt weist das erste flächige Kunststoffbauteil eine Dicke von kleiner 10 mm, insbesondere kleiner 5 mm, bevorzugt kleiner 3 mm auf. Insbesondere hat das erste flächige Kunststoffbauteil eine Dicke im Bereich von 10 bis 0,5 mm, bevorzugt von 5 bis 1 mm.

Das zweite Kunststoffbauteil kann verschiedenste Geometrien aufweisen, wie stabförmig, flächig oder komplexere Formen, wie wabenförmig. In einer bevorzugten Ausführungsform weist das zweite Kunststoffbauteil eine Stirnseite auf, mit der das zweite Kunststoffbauteil auf die Fläche des ersten flächigen Kunststoffbauteils gefügt wird. Bevorzugt wird das zweite Bauteil in einem Winkel von 45 bis 135 °, vorteilhaft in einem Winkel von 60 bis 120 °, insbesondere in einem Winkel von 80 bis 100 °, vorteilhaft in einem Winkel von 85 bis 95 ° auf die Fläche des ersten Bauteils aufgebracht. Besonders bevorzugt ist es, wenn das zweite Bauteil in einer nahezu senkrechten Position (90 ° +/-3 °), bevorzugt senkrechten Position auf die Fläche des ersten Bauteils aufgebracht wird. Der Winkel ist dabei der Öffnungswinkel nach der Verschweißung. In der bevorzugten, in Abbildung 1 dargestellten senkrechten Verschweißung des ersten flächigen Bauteils und des zweiten ebenfalls flächigen Bauteils, bei dem das zweite Bauteil mit der Stirnseite auf die Fläche des ersten Bauteils verschweißt wird, ergibt sich ein Öffnungswinkel von 90 °.

In einer anderen bevorzugen Ausführungsform kann das zweite Kunststoffbauteil auch mit einer flächigen Seite auf das erste Kunststoffbauteil aufgeschweißt werden.

In bevorzugten Ausführungsformen, insbesondere im Falle von einem flächigen verschweißen der Bauteile, wird weniger als 50 %, insbesondere weniger als 20 %, besonders bevorzugt weniger als 10 % der Fläche des ersten Bauteils mit dem zweiten Bauteil verschweißt.

Die beiden Kunststoffbauteile, die mittels dieses Verfahrens verschweißt werden, können zwei gleiche oder zwei unterschiedliche Kunststoffe sein. Vorzugsweise werden zwei gleiche Kunststoffe miteinander verschweißt. Unter zwei gleichen Kunstoffen werden Kunststoffe verstanden, die auf dem gleichen Polymer basieren, z.B. Polypropylen-Kunststoffe. Dabei können sich die Kunststoffe hinsichtlich des genauen polymeren Aufbaus als auch in der Art und Menge der Füllstoffe unterscheiden. Wenn sich die Kunststoffe zudem hinsichtlich des polymeren Aufbaus als auch in der Art und Menge der Füllstoffe gleichen, spricht man von identischen Kunststoffen. Dies kann ebenfalls bevorzugt sein.

Geeignete Kunststoffe sind z.B. Polyolefin-Kunststoffe, insbesondere thermoplastische Polyolefin-Kunststoffe. Ein Polyolefin-Kunststoff basiert auf polyolefinischen Polymeren, wie Homo- und Copolymere von alpha-Olefinen. Die polyolefinischen Polymere können ausgewählt werden aus der Gruppe bestehend aus Poly-alpha-Olefin-Homopolymeren auf Basis von Ethylen, Propylen und/oder Butylen, insbesondere Homopolymere aus Ethylen oder Propylen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethen oder Propen mit 1-Buten, 1-Hexen, 1-Octen, oder einer Kombination davon. Insbesondere sind die Polyolefin-Kunststoffe ausgewählt aus Polyethylen- (insbesondere high-density/HD-Polyethylen-, medium-density/MD-Polyethylen-, low-density/LD-Polyethylen-, ultra high molecular weight/UHMW-Polyethylen- und linear low-density/LLD-Polyethylen-) und Polypropylen-Kunststoffen. Besonders bevorzugt sind Polypropylen-Kunststoffe. Somit ist es bevorzugt zwei Polypropylen-Kunststoffbauteile unter Verwendung eines erfindungsgemäßen Welding Agents zu verschweißen.

Vorzugsweise haben die Polyolefin-Polymere, vorzugsweise die Polyethylen- und/oder Polypropylen-Polymere, insbesondere die Polypropylen-Polymere, eine gewichtsmittlere Molmasse (Gewichtsmittel Mw) von größer 10000 g/mol, insbesondere größer 20000 g/mol, bevorzugt größer 50000 g/mol. Vorzugsweise weisen die Polyolefin-Polymere, vorzugsweise die Polyethylen- und/oder Polypropylen-Polymere, insbesondere die Polypropylen-Polymere eine gewichtsmittlere Molmasse (Gewichtsmittel Mw) von kleiner 2000000 g/mol, insbesondere kleiner 1000000 g/mol, bevorzugt kleiner 500000 g/mol auf. Besonders bevorzugte Polyolefin-Polymere, vorzugsweise die Polyethylen- und/oder Polypropylen-Polymere, insbesondere die Polypropylen-Polymere haben gewichtsmittlere Molmassen (Gewichtsmittel Mw) von 50000 g/mol bis 250000 g/mol. Das gewichtsmittlere Molekulargewicht kann mittels GPC gegen einen Polystyrol-Standard bestimmt werden.

Die Polyolefin-Kunststoffe, vorzugsweise die Polyethylen- und/oder Polypropylen-Kunststoffe, insbesondere die Polypropylen-Kunststoffe können auch weitere Komponenten enthalten, z.B. Füllstoffe, wie Glasfasern, Naturfasern, Carbonfasern, Pigmente, Farbstoffe, Rheologiehilfsmittel, Entformungshilfen oder Stabilisatoren. Bevorzugt besteht der Polyolefin-Kunststoff, vorzugsweise die Polyethylen- und/oder Polypropylen-Kunststoffe, insbesondere die Polypropylen-Kunststoffe zu mehr als 80 Gew.-%, insbesondere zu mehr als 90 Gew.-%, bevorzugt zu mehr als 98 Gew.-% aus den genannten Polyolefin-Polymeren, insbesondere den genannten Polyethylen- und/oder Polypropylen-Polymeren, jeweils bezogen auf den Polymeranteil des Polyolefin-Kunststoffes (Gesamt Polyolefin-Kunststoff ohne Füllstoffe). Vorzugsweise besteht der Polyolefin-Kunststoff zu mehr als 50 Gew.-%, insbesondere zu mehr als 70 Gew.-%, vorzugsweise zu mehr als 90 Gew.-%, bevorzugt zu mehr als 95 Gew.-%, besonders bevorzugt zu mehr als 98 Gew.-% aus den genannten Polyolefin-Polymeren, insbesondere dem Polyethylen und/oder Polypropylen, jeweils bezogen auf den gesamten Polyolefin-Kunststoff (mit Füllstoffen). Vorzugsweise besteht der Polyolefin-Kunststoff zu 50 Gew.-%, bis 98 Gew.-%, insbesondere 60 Gew.-%, bis 90 Gew.-% aus den genannten Polyolefin-Polymeren, insbesondere dem Polyethylen und/oder Polypropylen, jeweils bezogen auf den gesamten Polyolefin-Kunststoff (mit Füllstoffen).

Ein weiterer wesentlicher Bestandteil der Erfindung ist die Verwendung mindestens eines Welding Agents, vorzugsweise genau eines Welding Agents. Der Welding Agent stellt ein Schweißhilfsmittel dar, welches vorzugsweise als eine Vorbehandlungsschicht auf mindestens einem der zu verschweißenden Oberflächen der Bauteile im Bereich der Fügezone aufgetragen wird. Der Welding Agent ist nicht als Klebstoff, Reinigungsmittel oder ähnliches zu verstehen, vielmehr ist der Welding Agent ein Hilfsmittel zum Schweißen, wodurch die Fügepartner in der Fügezone (bzw. Schweißzone) kompatibel zueinander gemacht werden und so in der Fügezone beim Fügen eine stoff- und kraftschlüssige Verbindung zwischen den zu verschweißenden Bauteilen entsteht. U.a. durch den zusätzlichen Masseeintrag durch den Welding Agent in der Fügezone und die Auswahl des Welding Agents kann der Abdruckeffekt verringert werden.

Der Welding Agent enthält mindestens ein Polymer, welches keinen höheren Schmelzpunkt, vorzugsweise einen geringeren Schmelzpunkt als die zu verschweißenden Kunststoffbauteile aufweist. Vorzugsweise ist der Schmelzpunkt des Welding Agents, insbesondere der eingesetzten Polymere im Welding Agent, kleiner als 200 °C, vorzugsweise kleiner als 170 °C. Bevorzugt ist der Schmelzpunkt des Welding Agents größer als 100 °C, vorzugsweise größer als 120 °C. Besonders bevorzugt ist der Schmelzpunkt des Welding Agents im Bereich von 100 bis 200 °C, insbesondere 120 bis 170 °C. Für den Fall, dass der Welding Agent aus einer Mischung von Polymeren besteht, ist der Schmelzpunkt des Welding Agents der Schmelzpunkt der Mischung der Polymere. Dabei kann es auch bevorzugt sein, dass auch die Schmelzpunkte aller eingesetzten Polymere in der Mischung die obigen Bedingungen erfüllen.

Vorzugsweise weist der Welding Agent eine geringere Schmelzenthalpie als die zu verschweißenden Kunststoffbauteile auf. Das bedeutet, dass die Schmelzenthalpie des Welding Agent-Polymers bzw. der Welding Agent-Polymere geringer ist als die Schmelzenthalpien der Kunststoffpolymere, aus denen die Kunststoffbauteile sind. Wenn der Kunststoff oder der Welding Agent aus einer Mischung von Polymeren besteht, wird die Mischung entsprechend vermessen (Summe der Teil-Schmelzenthalpien). Allerdings finden die in den Kunststoffbauteilen ggf. vorliegenden Zusatzstoffe, wie Füllstoffe, bei dieser Messung keine Berücksichtigung. Vorzugsweise ist die Schmelzenthalpie des Welding Agents, ggf. auch aller eingesetzten Polymere im Welding Agent zusammen, kleiner als 100 J/g, vorzugsweise kleiner als 50 J/g, insbesondere kleiner als 30 J/g. Bei der Verwendung von Welding Agent mit einer entsprechenden Schmelzenthalpie kann der notwendige Energieeintrag besonders gering gehalten werden.

Der Schmelzpunk als auch die Schmelzenthalpie kann mittels DSC mit einer Heizrate von 10K/min unter Schutzgas (Stickstoff) bestimmt werden, z.B. mit dem Gerät DSC TA Instruments Q20. Dabei wird gegen einen Indium Standard kalibriert. Die Schmelzenthalpie kann dabei nach DIN EN ISO 11357-3 bestimmt werden.

Durch die Verwendung eines entsprechenden Welding Agents kann eine stabile und dauerhafte Verbindung zwischen den zu fügenden Kunststoffbauteilen erzielt werden. Vorzugsweise weisen die gefügten Bauteile eine Zugfestigkeit bei Raumtemperatur von mehr als 0,5 MPa, insbesondere 2 MPa, vorzugsweise mehr als 5 MPa, bevorzugt mehr als 7 MPa auf. Zugfestigkeit wird mittels einer Zuggeschwindigkeit von 50 mm/s gemäß der in den Versuchen beschriebenen Versuchsdurchführung bestimmt.

Bevorzugt ist es zudem, dass der Welding Agent, bzw. das Polymer bzw. die Polymermischung, welches in dem Welding Agent enthalten ist, eine Zugfestigkeit von mehr als 2 MPa, insbesondere mehr als 5 MPa, bevorzugt mehr als 7 MPa aufweist. Durch entsprechende Welding Agent, die bereits als Materialeigenschaften des Ausgangsmaterials entsprechende Zugfestigkeiten erreichen, können besonders stabile Schweißverbindungen erzielt werden.

Besonders bevorzugt ist zudem, dass der Welding Agent eine Schmelzviskosität bei 200 °C von 1000 bis 200000 Pas, insbesondere 5000 bis 100000 Pas, bevorzugt 10000 bis 65000 Pas. Welding Agent mit einer entsprechenden Schmelzviskosität weisen ein besonders bevorzugtes Fliesverhalten beim Schweißen der Bauteile auf, da der Welding Agent nicht so schnell aus der Fügezone gedrückt wird, aber auch ein einfaches Fügen möglich ist. Dadurch kann der Abdruckeffekt zusätzlich unterdrückt werden.

Die Schmelzviskosität wird, sofern nichts anderes angeben ist, bei 200 °C mittels eines Platte-Platte-Rheometers (25 mm PP, 500 µm Gap, 1/s Scherrate, Rotation) bestimmt, wobei vorher die ggf. enthaltenen Lösungsmittel entfernt werden.

Geeignete Polymere, die im Welding Agent enthalten sein können, sind vor allem Polymere, welche aus mindestens einem Monomer mit mindestens einer Doppelbindung aufgebaut wurde. Dabei wird die Doppelbindung der Monomere, bevorzugt eine Kohlenstoff-Kohlenstoff-Doppelbindung, zum Aufbau der Polymere verwendet, z.B. durch radikalische oder kationische Polymerisation. Die Polymere werden somit unter Verwendung der Doppelbindung der Monomere synthetisiert. Geeignete Monomere sind zum Beispiel Ethylen, Propylen, alpha-Olefine, Styrol und Styrol-Derivate, (Meth)acrylsäure sowie Derivate davon, wie (Meth)acrylate oder Acrylnitril, und Maleinsäureanhydrid und Derivate davon, sowie Kombinationen davon. Dabei kann das Polymer ein Homopolymer oder Copolymer sein.

In einer bevorzugten Ausführungsform handelt es sich bei dem mindestens einen Polymer um Polymere, insbesondere Copolymere, welche in ihrem Gerüst Maleinsäureanhydrid-Gruppen einreagiert bzw. einpolymerisiert enthalten. Dabei kann in das Polymer ein Maleinsäureanhydrid bzw. Maleinsäureanhydrid-Derivat, insbesondere Maleinsäureanhydrid einreagiert bzw. einpolymerisiert sein. Ein Beispiel für ein Maleinsäureanhydrid-Derivat ist 1,2,3,6-Tetrahydrophthalsäureanhydrid, welches die relevante 5-gliedige Anhydrid-Gruppe umfasst. Dabei können die Polymere die Maleinsäureanhydrid-Gruppen sowohl im Backbone einpolymerisiert enthalten, wie zum Beispiel in einem Copolymer aus mindestens einem Maleinsäureanhydrid-Monomer und Acrylat- und/oder alpha-Olefin-Monomeren, als auch aufgepfropft enthalten, wie bei Maleinsäureanhydrid gepfropften Polyolefinen. In einer bevorzugten Form ist das Polymer im Welding Agent ein Maleinsäureanhydrid gepfropftes Polyolefin, insbesondere ein Maleinsäureanhydrid gepfropftes Polyethylen und/oder Maleinsäureanhydrid gepfropftes Polypropylen, bevorzugt ein Maleinsäureanhydrid gepfropftes Polypropylen.

In einer anderen besonders bevorzugten Ausführungsform enthält der Welding Agent vorzugsweise ein Copolymer, welches neben dem Maleinsäureanhydrid bzw. Maleinsäureanhydrid-Derivat ein oder mehrere Monomere ausgewählt aus der Gruppe von Acrylaten und Methacrylaten (zusammen (Meth)acrylate), insbesondere (Meth)acrylate mit einem Alkylrest mit 1 bis 12 Kohlenstoffatomen, vorzugsweise 1 bis 4 Kohlenstoffatomen, vorzugsweise Ethyl- und Butyl(meth)acrylat, (Meth)acrylsäure und alpha-Olefinen, insbesondere Ethylen, Propen, 1-Buten, 1-Hexen und 1-Octen, bevorzugt Ethylen einpolymerisiert enthält. Des Weiteren können auch funktionale Monomere mit Funktionalitäten wie beispielsweise Epoxid- oder Isocyanatgruppen, Carboxyl- oder Aminogruppen, aber auch Alkoxysilangruppen, eingesetzt werden. Besonders bevorzugt enthält das mindestens eine Copolymer einpolymerisiert zumindest ein Maleinsäureanhydrid(-Derivat), ein (Meth)acrylat und ein alpha-Olefin, vorzugsweise ein Maleinsäureanhydrid, ein (Meht)acrylat mit einem C1 bis C4 Alkylrest und ein Ethylen oder Propylen.

Die Maleinsäureanhydrid-Guppen enthaltenden Polymere können in bekannter Weise aus den Monomeren synthetisiert werden. Zusätzlich können diese Polymere in einer Polymer-analogen Reaktion gepfropft sein. Besonders bevorzugte Reaktionspartner zum Pfropfen sind Alkohole, Thiole, Amine, Isocyanate, Anhydride, Carbonsäuren, insbesondere Alkohole, bevorzugt Alkohole mit 1 bis 6 Kohlenstoffatomen, wie Methanol und Isobutanol. Zum Pfropfen können die Maleinsäureanhydrid-Monomere bzw. Maleinsäureanhydrid-Einheiten im Polymer mit dem Reaktionspartner reagieren, insbesondere durch Alkohole verestert werden. Vorzugsweise reagieren bzw. verestern die Maleinsäureanhydrid-Gruppen nur partiell, insbesondere weniger als 70 % der Maleinsäureanhydrid-Gruppen. Besonders bevorzugt ist es, wenn die Maleinsäureanhydrid-Gruppen nicht umgesetzt sind und weiterhin als Anhydrid Gruppen vorliegen. In der bevorzugten Ausführung können die Maleinsäureanhydrid-Gruppen auch teilweise hydrolysiert vorliegen. Eine komplette Umsetzung der Maleinsäureanhydrid-Gruppen kann zu einer Verminderung der Festigkeit der resultierenden Schweißverbindung führen.

Besonders vorteilhaft sind Polymere, die einen Maleinsäureanhydrid-Gehalt von größer gleich 0,001 Gew.-%, insbesondere größer gleich 0,01 Gew.-%, bevorzugt größer gleich 0,02 Gew.-%, besonders bevorzugt größer gleich 0,05 Gew.-% bezogen auf das Polyolefin-Polymer enthalten. In vorteilhafter Weise enthalten die Polymere einen Maleinsäureanhydrid-Gehalt von 0,01 - 15 Gew.-%, insbesondere 0,02 - 10 Gew.-%, bevorzugt 0,5 - 5 Gew.-% bezogen auf das Polyolefin-Polymer. In einer anderen bevorzugten Ausführungsform enthalten die Polymere einen Maleinsäureanhydrid-Gehalt von 2-15 Gew.-%, insbesondere 5-10 Gew.-%, bezogen auf das Polyolefin-Polymer. Polylolefin-Polymere mit einem entsprechenden Maleinsäureanhydrid-Gehalt weisen besonders gute Festigkeiten der geschweißten Verbindung auf.

In einer weiteren bevorzugten Ausführungsform können die erfindungsgemäßen Polymere polyolefinische Polymere, wie Homo- und Copolymere von alpha-Olefinen, sein. Die bevorzugten polyolefinischen Polymere können ausgewählt werden aus der Gruppe bestehend aus Poly-alpha-Olefin-Homopolymeren auf Basis von Ethen, Propen und/oder Buten, insbesondere Homopolymere aus Ethylen oder Propylen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethen oder Propen mit 1-Buten, 1-Hexen, 1-Octen, oder einer Kombination davon.

In einer weiteren bevorzugten Ausführungsform können die erfindungsgemäßen Polymere ausgewählt werden aus Copolymeren, welche als einpolymerisierte Monomere mindestens ein (Meth)acrylat und mindesteins ein Monomer ausgewählt aus einem Styrol oder Styrol-Derivat und mindestens ein weiteres anderes (Meth)acrylat enthalten. Ein solches Copolymer kann bevorzugt als erstes (Meth)acrylat Monomere ausgewählt aus der Gruppe von Acrylaten und Methacrylaten (zusammen (Meth)acrylate) mit einem Alkylrest mit 1 bis 20 Kohlenstoffatomen, vorzugsweise 10 bis 20 Kohlenstoffatomen, vorzugsweise Stearylacrylat enthalten. Das weitere andere (Meth)acrylat, welches von dem ersten verschieden ist, ist vorzugsweise ausgewählt aus der Gruppe von Acrylaten und Methacrylaten (zusammen (Meth)acrylate) mit einem Alkylrest mit 1 bis 12 Kohlenstoffatomen, vorzugsweise 1 bis 4 Kohlenstoffatomen, vorzugsweise Methyl(meth)acrylat. Neben dem Styrol und (Meth)acrylat kann das Copolymer weitere Monomere enthalten, wie Acrylsäure, unterschiedliche (Meth)acrylat-Monomere, insbesondere (Meth)acrylate mit einem Alkylrest mit 10 bis 20 Kohlenstoffatomen, Acrylnitril, alpha-Olefine oder Diene, wie Butadien. Des Weiteren können auch funktionale Monomere mit Funktionalitäten wie beispielsweise Epoxid- oder Isocyanatgruppen, Carboxyl- oder Aminogruppen, aber auch Alkoxysilangruppen, eingesetzt werden. Besonders bevorzugte Copolymere enthalten oder sind insbesondere synthetisiert aus Stearylacrylat und Methylmethacrylat oder Stearylacrylat und Styrol.

In einer ganz besonders bevorzugten Ausführungsform können die erfindungsgemäßen Polymere ausgewählt werden aus thermomechanisch degradierten Copolymere, insbesondere thermomechanisch degradierten Polyethylen- bzw. Polypropylencopolymeren, bevorzugt thermomechanisch degradierten Polypropylencopolymeren.

Unter einem "Polypropylencopolymer" werden im Sinne der vorliegenden Erfindung Copolymere von Propylen mit anderen Comonomeren, wie beispielsweise Ethylen und/oder C4 bis C20 alpha-Olefinen verstanden. Entsprechendes gilt für Polyethylencopolymere.

Unter einem "thermomechanisch degradierten Polypropylencopolymer" wird im Sinne der vorliegenden Erfindung ein Polymer verstanden, das, ausgehend von einem Polypropylencopolymer, durch thermomechanische Degradierung in einer geeigneten Vorrichtung her-gestellt wird. Dabei ist das unter vergleichbaren Bedingungen bestimmte gewichtsmittlere Molekulargewicht (Mw) des degradierten Polypropylencopolymers stets kleiner als das gewichtsmittlere Molekulargewicht (Mw) des Polypropylencopolymers.

Das Polypropylencopolymer, also das Ausgangspolymer, aus dem durch thermomechanische Degradierung das thermomechanisch degradierte Polypropylencopolymer der vorliegenden Erfindung hergestellt wird, wird im Rahmen der vorliegenden Erfindung auch als höhermolekulares, undegradiertes Polypropylencopolymer bezeichnet.

Unter dem Begriff "thermomechanische Degradierung" wird im Sinne der vorliegenden Erfindung ein Polymerketten-verkürzender und Molekulargewichts-reduzierender Abbauprozess verstanden, der in einer geeigneten Vorrichtung, wie beispielsweise einem Extruder unter Wärmeeinwirkung und Scherbeanspruchung durchgeführt wird.

Im Rahmen der vorliegenden Erfindung ist es insbesondere vorteilhaft, wenn die thermomechanische Degradierung in der Weise durchgeführt wird, dass bei der genannten Degradierung keine weiteren reaktiven Verbindungen, wie etwa olefinisch ungesättigte Monomere anwesend sind.

Geeignete thermomechanisch degradierte Polypropylencopolymere können aus handelsüblichen höhermolekularen, undegradierten Polypropylencopolymeren durch ein thermomechanische Degradierungsverfahren hergestellt werden, das vorzugsweise in einem Extruder bei Temperaturen von über 150°C durchgeführt wird.

Der erfindungsgemäß verwendete Welding Agent umfasst, bezogen auf die Gesamtmenge des Welding Agents, 10 bis 80 Gew.-%, vorzugsweise 20 bis 70 Gew.-% und besonders bevorzugt 30 bis 60 Gew.-% mindestens eines thermomechanisch degradierten Polypropylencopolymeren.

Selbstverständlich kann der erfindungsgemäß verwendete Welding Agent auch Mischungen aus unterschiedlichen thermomechanisch degradierten Polypropylencopolymeren enthalten, wobei insbesondere Mischungen aus zwei unterschiedlichen thermomechanisch degradierten Polypropylencopolymeren bevorzugt sind.

Das in der vorliegenden Erfindung verwendete thermomechanisch degradierte Polypropylencopolymer ist ein Polyolefincopolymer, das in polymerisierter Form neben Propylen mindestens ein weiteres Comonomer enthält, das vorzugsweise ausgewählt wird aus Ethylen und/oder C4 bis C20 alpha-Olefinen. Bevorzugte C4 bis C20 alpha-Olefine sind insbesondere aliphatische C4 bis C20 alpha-Olefine, die keine aromatischen Gruppen umfassen, wie beispielsweise Buten, Penten, Hexen, Hepten, Octen, Nonen, Decen, Dodecen, 4-Methyl-1-penten, 3,5,5-Trimethyl-1-hexen und 5-Ethyl-1-nonen. In einer Ausführungsform der Erfindung werden als degradiertes Polypropylencopolymer Terpolymere auf Basis von Propylen, Ethylen und C4 bis C20 aliphatischen alpha-Olefinen verwendet.

Der Propylenanteil im thermomechanisch degradierten Polypropylencopolymer der vorliegenden Erfindung liegt vorzugsweise zwischen 50 bis 99 Gew.-%, insbesondere zwischen 60 bis 97 Gew.-% und besonders bevorzugt zwischen 65 bis 95 Gew.-%, jeweils bezogen auf das Gesamtgewicht des themomechanisch degradierten Polypropylencopolymers. Thermomechanisch degradierte Polypropylencopolymere, welche die vorgenannten Gewichtsanteile an Propylen aufweisen, können in besonders effektiver Weise aus den entsprechenden höhermolekularen, undegradierten Polypropylencopolymeren durch thermomechanische Degradierung unter starker Molekulargewichtsreduzierung und Viskositätserniedrigung erhalten werden.

Sofern vorhanden, liegt der Ethylengehalt im thermomechanisch degradierten Polypropylencopolymer der vorliegenden Erfindung vorzugsweise zwischen 1 bis 25 Gew.-% und besonders bevorzugt zwischen 2 bis 20 Gew.-%, jeweils bezogen auf das Gesamtgewicht des thermomechanisch degradierten Polypropylencopolymers. Thermomechanisch degradierte Polypropylencopolymere, welche die vorgenannten Gewichtsanteile an Ethylen auf-weisen, können ebenfalls in besonders effektiver Weise aus den entsprechenden höhermolekularen, undegradierten Polypropylencopolymeren durch thermomechanische Degradierung unter starker Molekulargewichtsreduzierung und Viskositätserniedrigung erhalten wer-den.

Das gewichtsmittlere Molekulargewicht (Mw) des thermomechanisch degradierten Polypropylencopolymers der vorliegenden Erfindung beträgt vorzugsweise 1000 g/mol bis 200000 g/mol, besonders bevorzugt 10000 g/mol bis 150000 g/mol und ganz besonders bevorzugt 20000 g/mol bis 100000 g/mol.

Im Rahmen der vorliegenden Erfindung wird das gewichtsmittlere Molekulargewicht (Mw) mittels Gelpermeationschromatographie (GPC) unter Verwendung eines Polystyrolstandards bestimmt.

Das vorgenannte thermomechanisch degradierte Polypropylencopolymer wird durch thermomechanische Degradierung eines höhermolekularen, undegradierten Polypropylen-copolymer erhalten, wobei das letztgenannte Polymer vorzugsweise ein gewichtsmittleres Molekulargewicht (Mw) von 100000 g/mol bis 3000000 g/mol, besonders bevorzugt 150000 g/mol bis 1000000 g/mol und ganz besonders bevorzugt 200000 g/mol bis 800000 g/mol aufweist.

Der Einsatz hochmolekularer, undegradierter Polypropylencopolymere mit einem gewichtsmittleren Molekulargewicht von mindestens 100000 g/mol, vorzugsweise von mindes-tens 150000 g/mol und insbesondere von mindestens 200000 g/mol ist vorteilhaft, da die genannten Polymere kostengünstig herstellbar sind und effektiv zu den thermomechanisch degradierten Polypropylencopolymeren der vorliegenden Erfindung abgebaut werden können.

Vorzugsweise beträgt das gewichtsmittlere Molekulargewicht (Mw) des thermomechanisch degradierten Polypropylencopolymers weniger als 70%, besonders bevorzugt weniger als 60%, ganz besonders bevorzugt weniger als 50% und überaus bevorzugt weniger als 40% des unter identischen Bedingungen bestimmten gewichtsmittleren Molekulargewichts (Mw) des höhermolekularen, undegradierten Polypropylencopolymers. Unter dem gewichtsmittleren Molekulargewicht (Mw) des höhermolekularen, undegradierten Polypropylencopolymers wird dabei dessen Ausgangsmolekulargewicht verstanden, also das gewichtsmittlere Molekulargewicht (Mw) des genannten Polymers vor Durchführung der thermomechanischen Degradierung.

In einerweiteren Ausführungsform wird das thermomechanisch degradierte Polypropylen-copolymer der vorliegenden Erfindung durch thermomechanische Degradierung mindestens eines undegradierten, höhermolekularen Polypropylencopolymers unter Scherbeanspruchung oberhalb des Erweichungspunktes des undegradierten, höhermolekularen Polypropylencopolymers hergestellt, wobei die bei 200°C bestimmte Schmelzviskosität des thermomechanisch degradierten Polypropylencopolymers weniger als 70%, besonders bevorzugt weniger als 60%, ganz besonders bevorzugt weniger als 50%, überaus bevorzugt weniger als 40% der ebenfalls bei 200°C bestimmten Schmelzviskosität des undegradierten, höhermolekularen Polypropylencopolymers beträgt.

Unter der "Schmelzviskosität" des undegradierten, höhermolekularen Polypropylencopolymers wird dabei dessen Ausgangsschmelzviskosität verstanden, also die bei 200°C bestimmte Schmelzviskosität des undegradierten, höhermolekularen Polypropylencopolymers vor der Durchführung der thermomechanischen Degradierung.

Die bei 200°C bestimmte Schmelzviskosität des thermomechanisch degradierten Polypropylencopoylmers der vorliegenden Erfindung beträgt vorzugsweise 100 mPa·s bis 200000 mPa·s, besonders bevorzugt 1000 mPa·s bis 100000 mPa·s, überaus bevorzugt 2000 mPa·s bis 80000 mPa·s und ganz besonders bevorzugt 6000 mPa·s bis 60000 mPa·s.

Die thermomechanisch degradierten Polypropylencopoylmere der vorliegenden Erfindung werden dabei vorzugsweise aus undegradierten, höhermolekularen Polypropylencopolymeren erhalten, wobei die letztgenannten Polymere vorzugsweise eine bei 200°C bestimmte Schmelzviskosität von mindestens 300000 mPa·s aufweisen. Insbesondere liegt die bei 200°C bestimmte Schmelzviskosität der jeweiligen undegradierten, höhermolekularen Polypropylencopoylmere zwischen 350000 mPa·s und 20000000 mPa·s, vorzugsweise zwischen 400000 mPa·s und 10000000 mPa·s und besonders bevorzugt zwischen 450000 mPa·s und 5000000 mPa·s.

Durch die thermomechanische Degradierung des Polypropylencopolymers weisen die thermomechanisch degradierten Polypropylencopolymere der vorliegenden Erfindung vorzugsweise mindestens 0,5·10⁻⁵ mol, besonders bevorzugt mindestens 2,0·10⁻⁵ mol und überaus bevorzugt mindestens 5,0·10⁻⁵ mol an funktionellen Gruppen pro Gramm Polymer auf, wobei die funktionellen Gruppen insbesondere ausgewählt werden aus Sauerstoff-umfassenden funktionellen Gruppen, wie etwa OH-, Lacton-, Acetylester-, Aldehyd-, Keton-,und Carbonsäure-Gruppen, sowie aus Vinyliden-Gruppen. Thermomechanisch degradierte Polypropylencopolymere, welche die vorgenannte Konzentration an funktionellen Gruppen aufweisen, zeigen insbesondere eine gute Substrathaftung.

Die Konzentration der funktionellen Gruppen im thermomechanisch degradierten Polypropylencopolymer der vorliegenden Erfindung kann vom Fachmann leicht unter Verwendung geläufiger spektroskopischer Methoden, wie beispielsweise NMR- und/oder IR-Spektroskopie bestimmt werden.

Die thermomechanisch degradierten Polypropylencopoylmere der vorliegenden Erfindung können besonders effektiv hergestellt werden, wenn die thermomechanische Degradierung der Polymere in Gegenwart mindestens eines Radikalbildners durchgeführt wird.

Unter einem "Radikalbildner" wird im Sinne der vorliegenden Erfindung eine Substanz verstanden, die durch äußere Einwirkung, wie beispielsweise Wärme und/oder Strahlung, in Radikale zerfällt.

Geeignete Radikalbildner sind in erster Linie Peroxo- oder Diazogruppen enthaltende Ver-bindungen, wobei Peroxide, wie etwa organische Peroxide, aufgrund ihrer guten kommerziellen Verfügbarkeit und leichten Handhabbarkeit bevorzugt sind. Vorteilhafte Radikalbildner können beispielsweise ausgewählt werden aus den folgenden Produkten bzw. Verbindungen und/oder aus deren beliebigen Mischungen: TRIGONOX 101® (2,5-Dimethyl-2,5-di-[tert-butylperoxyl]hexan), TRIGONOX 301® (3,6,9-Triethyl-3,6,9-trimethyl-1,4,7-triperoxonan), beide kommerziell erhältlich von AKZO, Di-tert-amylperoxid, kommerziell erhältlich von CK Witco als DTAP® und von AKZO als Trigonox 201®, Dicumylperoxid, Di-tert-butylperoxid, 2,5-Dimethyl-2,5-di(tert-butyl peroxy)-3-hexin, 1,3-Bis(tert-butylperoxyisopropyl)phenyl, 1,1-Bis(tert-butylperoxy)-3,3,5-trimethyl¬cyclohexan, n-Butyl-4,4-bis(tert-butylperoxy)valerat, Benzoylperoxid, p-Chlorbenzoylperoxid, 2,4-Dichlorbenzoylperoxid, Tert-butylperoxybenzoat, tert-Butylperoxyisopropylcarbonat, Di-acetylperoxid, Lauroylperoxid, Tert-Butylcumylperoxid, Tert-butylperoxy-2-ethylhexanoat.

Bevorzugte Peroxide besitzen eine in Monochlorbenzol bei 150°C bestimmte Halbwertzeit von 0,01 h bis 10 h, vorzugsweise von 0,1 h bis 5 h und besonders bevorzugt von 0,3h bis 3h.

Zur Herstellung der thermomechanisch degradierten Polypropylencopoylmere ist es insbesondere vorteilhaft, wenn im Rahmen der thermomechanischen Degradierung den undegradierten, höhermolekularen Polypropylencopoylmeren der Radikalbildner in einer Menge von 0,01 und 5 Gew.-%, vorzugsweise in einer Menge von 0,02 bis 2 Gew.-% und insbesondere in einer Menge von 0,1 und 1,5 Gew.-%, jeweils bezogen auf die Gesamtmenge des undegradierten, höhermolekularen Polypropylencopoylmers zugegeben wird.

Vorzugsweise wird als Radikalbildner ein Peroxid in einer Menge von 0,01 und 3 Gew.-%, vorzugsweise von 0,1 bis 2 Gew.-% und insbesondere von 0,2 und 1,5 Gew.-%, jeweils bezogen auf die Gesamtmenge an höhermolekularem, undegradierten Polypropylencopolymer zugegeben. Durch die beschriebene Menge an Radikalbildner bzw. Peroxid kann der thermomechanische Degradierungsprozess bei einer Temperatur von 100°C bis 350°C, vorzugsweise von 120°C bis 320°C und besonders bevorzugt von 140°C bis 300°C durchgeführt werden.

Eine geeignete Vorrichtung zur Durchführung der thermomechanische Degradierung ist vorzugsweise ein Extruder. Unter dem Begriff "Extruder" können im Sinne der vorliegenden Erfindung vorzugsweise sowohl Einschnecken-, als auch Doppelschneckenextruder verstanden werden. Letztgenannte sind technisch aufwändiger und werden in unterschiedlichen Bauformen angeboten. Man unterscheidet dabei insbesondere zwischen gleich- oder gegenlaufenden, dichtkämmenden odertangierenden, längs bzw. quer offenen oder geschlossenen und zylindrischen oder konischen Bauarten. Auch können Compounder, Expansionsextruder, Ringextruder oder Planetenwalzenextruder eingesetzt werden.

Ein zum Einsatz kommender Extruder kann ein Gehäuse mit einer Zuführseite und einer Abgabeseite umfassen, in dem wenigstens eine Schnecke drehbar gelagert sein kann, von deren Schneckenkern ein beispielsweise schraubenlinienförmig verlaufender Steg absteht. Das Gehäuse kann auf der Zuführseite wenigstens eine Zuführöffnung für die im Extruder zu verarbeitenden undegradierten, höhermolekularen Polypropylencopoylmere aufweisen sowie optional ein oder mehrere Beschickungsöffnungen für Additive, Zusatz- und/oder Hilfsstoffe, durch die insbesondere mindestens ein Radikalbildner, wie beispielsweise ein Peroxid zugeführt wird. Unter Scherbeanspruchung und insbesondere unter Wärmeeinwirkung kann dann das thermomechanisch degradierte Polypropylencopoylmer aus einem entsprechenden undegradierten, höhermolekularen Polypropylencopoylmeren oberhalb dessen Erweichungspunktes im Extruder, vorzugsweise in Gegenwart von Peroxiden her-gestellt werden.

Vorzugsweise weisen die thermomechanisch degradierten Polypropylencopolymere der vorliegenden Erfindung eine Glasübergangstemperatur (Tg) von kleiner als 0°C, besonders bevorzugt von kleiner als -10°C auf, wobei die Glasübergangstemperatur insbesondere größer ist als -80°C, vorzugsweise größer als -40°C.

Die Glasübergangstemperatur (Tg) wird im Rahmen der vorliegenden Erfindung in bekannter Weise mittels DSC (Differential Scanning Calorimetry), vorzugsweise unter Verwendung eines DSC Q2000 der TA Instruments bestimmt.

Besonders vorteilhafte erfindungsgemäß verwendbare Welding Agents, welche zu sehr stabilen und dauerhaften Verbindungen führen und sich durch eine besonders gute Verarbeitbarkeit auszeichnen, werden im Sinne der vorliegenden Erfindung erhalten, wenn der erfindungsgemäß verwendete Klebstoff mindestens zwei unterschiedliche thermomechanisch degradierte Polypropylencopolymere umfasst, wobei vorzugsweise mindestens ein thermomechanisch degradiertes Polypropylencopolymer eine Schmelzenthalpie von 1 J/g bis 50 J/g und mindestens ein weiteres thermomechanisch degradiertes Polypropylencopolymer eine Schmelzenthalpie von 55 J/g bis 120 J/g aufweist.

Insbesondere sind Kombinationen von mindestens zwei unterschiedlichen thermomechanisch degradierten Polypropylencopolymeren bevorzugt, in denen
- mindestens ein thermomechanisch degradiertes Polypropylencopolymer eine Schmelzenthalpie von 5 J/g bis 40 J/g, besonders bevorzugt von 8 J/g bis 30 J/g und/oder
- mindestens ein weiteres thermomechanisch degradiertes Polypropylencopolymer eine Schmelzenthalpie von 60 J/g bis 100 J/g, besonders bevorzugt von 62 J/g bis 90 J/g aufweist.

Als weiteren Bestandteil kann der erfindungsgemäß verwendete Welding Agent mindestens ein klebrigmachendes Harz enthalten. Es handelt sich dabei insbesondere um Harze, die einen Erweichungspunkt von 60 bis 140 °C besitzen. Es sind dieses zum Beispiel aromatische, aliphatische oder cycloaliphatische Kohlenwasserstoff-Harze, sowie modifizierte oder hydrierte Derivate, insbesondere hydrierte Polycyclopentadienharze. Weitere im Rahmen der Erfindung anwendbare Harze sind z.B. Polyterpenharze, phenolisch oder aromatisch modifizierte Polyterpenharze, modifizierte Naturharze, wie Harzsäuren aus Balsamharz, Tallharz oder Wurzelharz, ggf. auch Hydroabietylalkohol und deren Ester, Acrylsäure-Copolymerisate, wie Styrol-Acrylsäure-Copolymere und Harze auf Basis funktioneller Kohlenwasserstoffharze. Insbesondere sind Kohlenwasserstoff-Harze geeignet. Solche Herze sind kommerziell verfügbar. Sie werden in einer Menge von 5 bis 60 Gew.-%, bevorzugt von 10 bis 50 Gew.-%, eingesetzt, jeweils bezogen auf die Gesamtmenge des erfindungsgemäß verwendbaren Welding Agents.

Der erfindungsgemäß verwendbare Schmelzklebstoff kann neben den oben genannten Bestandteilen noch weitere Bestandteile als Additive enthalten. Hierzu zählen beispielsweise Weichmacher, Stabilisatoren, Wachse, Haftvermittler, Füllstoffe, wie etwa Pigmente und/oder Antioxidantien. Damit können be-stimmte anwendungstechnische Eigenschaften, wie z. B. Kohäsionsfestigkeit, Viskosität, Erweichungspunkt beeinflusst werden. Weiterhin können Füllstoffe zur Festigkeitserhöhung und ggf. der Kostenreduzierung eingesetzt werden.

In einer bevorzugten Ausführungsform enthält der erfindungsgemäße Welding Agent:

| | |
|---|---|
| - 10 bis 80 Gew.-% | mindestens eines thermomechanisch degradierten Polypropylencopolymers, |
| - 5 bis 60 Gew.-% | mindestens eines klebrigmachenden Harzes, und |
| - 0 bis 40 Gew.-% | mindestens eines weiteren Additivs. |

Zusätzlich zu den oben erwähnten Bestandteilen kann der erfindungsgemäß verwendbare Welding Agent ggf. noch weitere elastische thermoplastische Polymere enthalten. Diese Polymere können verschiedene anwendungstechnische Eigenschaften des Welding Agents verbessern, z. B. Kohäsion, Wärmestandfestigkeit, Kälteflexibilität. Unter solchen elastischen Polymeren sind insbesondere Styrol-Block-Copolymere zu verstehen, die elastische oder Kautschuk-elastische Eigenschaften aufweisen können. Es kann sich dabei um 2 Block- oder 3 Block-Copolymere handeln, die mindestens einen Styrol-Block aufweisen können. Beispiele dafür sind SBR, SAN, Styrol-Isopren-Copolymere (SIS), Styrol-Ethylen/Buthylen-Copolymere (SEBS), Styrol-Ethylen/Propylen-Copolymere (SEPS), Styrol-Isopren-Butylen-Copolymere (SIBS), Strylol-Butadien-Copolymere (SBS), hydrierte Styrol-Butylen-Butadien-Copolymere (SBBS). Solche Block-Copolymere sind dem Fachmann bekannt und kommerziell erhältlich. Weitere Beispiele sind Polybuten oder seine Copolymere, Polymethylvinylether u. ä. Polymere, sowie Polyphenylenoxid und Modifikationen davon. Dabei sollen diese zusätzlichen Polymere bei Raumtemperatur (22°C) fest sein und sich homogen mit den erfindungsgemäß verwendbaren Polymeren mischen lassen. Eine Mikrophasenstruktur ist dabei nicht ausgeschlossen. Gegebenenfalls können die weiteren Polymeren zum Beispiel durch Pfropfung funktionalisiert sein. Ein bevorzugtes Pfropfungsmittel stellen beispielsweise Dicarbonsäuren und deren Anhydride dar.

Die elastischen Polymere sind vom Fachmann so auszuwählen, dass eine gute Verträglichkeit mit den anderen Bestandteilen des erfindungsgemäß verwendbaren Welding Agents gegeben ist. Die Menge der Polymere kann, jeweils bezogen auf die Gesamtmenge des erfindungsgemäß verwendbaren Welding Agents, 1 bis 30 Gew.-% betragen, insbesondere können 5 bis 25 Gew.-% mindestens eines thermoplastischen Elastomeren enthalten sein. Wenn der Welding Agent ein entsprechendes elastisches thermoplastisches Polymer, insbesondere ein Styrol-Block-Copolymer, wie ein Styrol-Ethylen/Buthylen-Copolymer, enthält, kann insbesondere die Kälteflexibilität der Schweißstelle entschieden verbessert werden.

In einer besonders bevorzugten Ausführungsform enthält der erfindungsgemäße Welding Agent:

| | |
|---|---|
| - 10 bis 80 Gew.-% | mindestens eines thermomechanisch degradierten Polypropylencopolymers, |
| - 0 bis 60 Gew.-% | mindestens eines klebrigmachenden Harzes, |
| - 1 bis 30 Gew.-% | mindestens eines thermoplastischen Elastomers, insbesondere Styrol-Block-Copolymers und |
| - 0 bis 40 Gew.-% | mindestens eines weiteren Additivs. |

Die Additive, wie Weichmacher, Stabilisatoren oder Haftvermittler sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist. Selbstverständlich können im Rahmen der vorliegenden Erfindungen Mischungen aus verschiedenen Weichmacher, Mischungen aus verschiedenen Stabilisatoren und/oder Mischungen aus verschiedenen Haftvermittlern eingesetzt werden.

Für die Optimierung der mechanischen Eigenschaften und Applikationseigenschaften kann der erfindungsgemäß verwendete Welding Agent als Additiv weiterhin einen oder mehrere Füllstoffe enthalten. Als Füllstoffe sind geeignet anorganische und organische Füllstoffe, zum Beispiel natürliche, gemahlene oder gefällte Calciumcarbonate, Baryt (BaSO4, auch Schwerspat genannt), calcinierte Kaoline, Kieselsäuren, insbesondere hochdisperse Kieselsäuren aus Pyrolyseprozessen, Russe, insbesondere industriell hergestellte Russe, PVC-Pulver oder Hohlkugeln, sowie flammhemmende Füllstoffe wie Hydrate oder Hydroxide, insbesondere Aluminiumhydroxid und Aluminiumoxid-Trihydrat. Bevorzugte Füllstoffe sind Calciumcarbonate, Russe und kalzinierte Kaoline.

Aufgrund der besonderen Eigenschaften der thermomechanisch degradierten Polypropylencopolymere ist es möglich, dass der erfindungsgemäß verwendbare Welding Agent nur geringe Anteile an Füllstoffen aufweist, oder im Wesentlichen frei bzw. vollkommen frei von Füllstoffen ist, ohne dass sich die mechanischen Eigenschaften und Applikationseigenschaften des Schmelzklebstoffs wesentlich verschlechtern.

Unter im "Wesentlichen frei von Füllstoffen" wird im Sinne der vorliegenden Erfindung verstanden, dass der Schmelzklebstoff weniger als 10 Gew.-%, vorzugsweise weniger als 5 Gew.-%, besonders bevorzugt weniger als 1 Gew.-% und überaus bevorzugt weniger als 0,1 Gew.-% an Pigmenten und/oder Füllstoffen enthält.

Neben dem Polymeren kann der Welding Agent auch ein Lösungsmittel, insbesondere ein organisches Lösungsmittel enthalten. Vorzugsweise enthält der Welding Agent einen Lösungsmittelgehalt von 10 - 95 Gew.-%, insbesondere 50 - 90 Gew.-%, besonders bevorzugt 70 - 85 Gew.-%, jeweils bezogen auf das Gesamtgewicht des Welding Agents.

Wenn organische Lösungsmittel eingesetzt werden, beträgt der Gesamtpolymergehalt des Welding Agents vorzugsweise 1 - 90 Gew.-%, insbesondere 2 - 50 Gew.-%, besonders bevorzugt 5-15 Gew.-%, jeweils bezogen auf das Gesamtgewicht des Welding Agents. Der Gesamtpolymergehalt entspricht dem Gehalt aller im Welding Agent verwendeten Polymere, insbesondere der erfindungsgemäßen Polyolefin-Polymere und der oben beschriebenen weiteren Polymere.

In einer anderen bevorzugten Ausführungsform liegt der Welding Agent in Form einer wässrigen Dispersion oder Emulsion vor. In diesem Fall ist das erfindungsgemäße Polyolefin-Polymer bzw., wenn vorhanden, die weiteren Polymere in Wasser emulgiert oder dispergiert. In diesem Fall beträgt der Gesamtpolymergehalt des Welding Agents vorzugsweise 5 - 90 Gew.-%, insbesondere 20 - 70 Gew.-%, besonders bevorzugt 30 - 55 Gew.-%, jeweils bezogen auf das Gesamtgewicht des Welding Agents. Für die wässrige Dispersion/Emulsion ist es vorteilhaft, dass die Polymerkomponente im Wesentlichen nur aus dem erfindungsgemäßen Polyolefin-Polymer bzw. deren Mischung und dem gegebenenfalls vorhandenen oben genannten weiteren Polymer, insbesondere nur aus dem erfindungsgemäßen Polymer bzw. dessen Mischung besteht. Unter dem Begriff "im Wesentlichen aus" wird erfindungsgemäß verstanden, wenn die Polymerkomponente zu mehr als 95 Gew.-%, vorzugsweise mehr als 97 Gew.-%, ganz besonders bevorzugt mehr als 99 Gew.-% aus der erfindungsgemäßen Polyolefin-Polymer und dem gegebenenfalls vorhandenen oben genannten weiteren Polymer, insbesondere nur aus dem erfindungsgemäßen Polyolefin-Polymer bzw. deren Mischung besteht.

In einer ganz besonders bevorzugten Ausführungsform ist der Welding Agent im Wesentlichen frei von Lösungsmitteln.

Neben dem Polymer und ggf. vorhandenen Lösungsmittel kann der Welding Agent weitere Komponenten enthalten, wie zum Beispiel Füllstoffe, (Fluoreszenz)-Farbstoffe und Pigmente, Entschäumungshilfen, rheologisches Hilfsmittel, Benetzungshilfsmittel, Stabilisatoren oder Weichmacher. Die weiteren Komponenten, insbesondere für den Fall, dass der Welding Agent im Wesentlichen frei von Lösungsmittel ist, können bis zu 70 Gew.-%, insbesondere bis zu 50 Gew.-%, vorzugsweise bis zu 30 Gew.-% enthaltend sein. Abgesehen von Farbstoffen und Pigmenten ist der Welding Agent jedoch vorzugsweise im Wesentlichen frei von weiteren Komponenten, insbesondere im Wesentlichen frei von jeglichen anderen Komponenten. Unter dem Begriff "im Wesentlichen frei von" wird erfindungsgemäß verstanden, wenn der Welding Agent weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthalten.

Der Welding Agent kann durch verschiedenste Verfahren auf die Oberfläche eines oder beider Fügepartner aufgetragen werden. So kann die Auftragung zum Beispiel durch eine Dosiervorrichtung, durch eine Nadel und Dosierroboter, durch Spritzgießen, durch Extrusion, durch Folienauftrag, durch Auftrag aus der Schmelze, durch Aufsprühen, durch Aufstreichen oder durch Dippen erfolgen. Dabei kann der Welding Agent entweder nur auf eine Oberfläche oder auf beide Oberflächen der zu verschweißenden Bauteile aufgetragen werden. Vorzugsweise wird der Welding Agent nur auf eine Oberfläche aufgetragen. In dem Fall des Verschweißens mittels einer Folie wird die Folie zwischen die Substrate gelegt.

Für den Fall, dass der Welding Agent Lösungsmittel enthält bzw. als Emulsion/Dispersion eingesetzt wird, wird der Welding Agent nach dem Auftrag auf eine oder beide Oberflächen vorzugsweise so lange getrocknet bis das Lösungsmittel soweit verdampft ist, dass eine nicht klebrige, dimensionsstabile Welding Agentschicht entstanden ist. Insbesondere ist der Welding Agent bereits nach wenigen Sekunden und bis zu mehreren Wochen schweißbar. Vorzugsweise wird der Welding Agent nach dem Auftrag für mindestens eine Stunde, bevorzugt für mindestens 12 Stunden getrocknet.

Besonders bevorzugt ist der Welding Agent bei Raumtemperatur (20°C) fest. Vorzugsweise wird der Welding Agent aus der Schmelze aufgetragen.

Vorteilhaft am vorliegenden Welding Agent ist, dass dieser bereits nach wenigen Sekunden nach Auftrag schweißbar ist und zudem die Fähigkeit zum Schweißen auch für mehreren Wochen behält. Dies gilt umso mehr für den Fall, dass der Welding Agent ohne Lösungsmittel eingesetzt wird, insbesondere als Hotmelt.

Vorzugsweise erfolgt der Auftrag auf eine oder beide Oberflächen der zu verschweißenden Substrate in der Weise, dass der Welding Agent eine Schichtdicke von 1 µm bis 10000 µm, insbesondere 100-5000 µm, bevorzugt 500-3000 µm. Falls ein Lösungsmittel im Welding Agent enthalten war, bezieht sich die Schichtdicke auf den vom Lösemittel getrockneten Welding Agent.

Nach dem Auftragen auf einen bzw. beide Oberflächen der zu verschweißenden Substrate und gegebenenfalls dem Trocknen des Welding Agents können die zu verschweißenden Substrate mit einem gängigen Schweißverfahren miteinander verbunden werden. Das Schweißen von Kunststoffen erfolgt im Allgemeinen durch eine lokale Plastifizierung der Fügepartner in der Fügeebene und das Fügen unter Druck. Die Prozessparameter sind so zu wählen, dass ein ausgeprägtes Quetschfließen der Schmelze zu einer optimalen Verbindung der Fügepartner in der Fügeebene führt. Die Erwärmung kann über Konvektion, Kontakterwärmung, Strahlung oder Reibung erfolgen. Der unterschiedliche Energieeintrag zum Plastifizieren kann auf vielfältige Art und Weise erfolgen und hat zu verschiedenen Prozessen zum Schweißen von Kunststoffen geführt. Geeignete Schweißverfahren sind beispielsweise:
- Heißgasschweißen [HG] (Hot gas welding)
   Konvektive Erwärmung mit einem heißen Gasstrom, im allgemeinen Luft, zweistufiger Prozess
- Heizelementschweißen [HE] (Hot plate welding)
   Kontakterwärmung, zweistufiger Prozess
- Ultraschallschweißen [US] (Ultrasonic welding)
   Erwärmung durch Reibung, eine transversale Welle im Ultraschallbereich führt zu einer Erwärmung in der Grenzschicht, einstufiger Prozess
- Hochfrequenzschweißen [HF] (High frequency welding)
   Erwärmung durch innere Reibung, polare Moleküle orientieren sich entsprechen eines hochfrequenten Magnetfelds, einstufig, nur für polare Kunststoffe und Folien eingesetzt
- Vibrationsschweißen [VIB] (Friction welding: Linear; Orbital; Spin; Angle)
   Erwärmung durch Reibung, einstufiger Prozess
- Laserschweißen [LW] (Laser welding: Kontur, Simultan, Quasisimultan, Maske)
   Erwärmung durch Strahlung, Strahlung kohärent, Lasertransmissionsschweißen, im Allgemeinen einstufig (zweistufig möglich)
- Infrarotschweißen [IR] (Infrared welding)
   Erwärmung über Strahlung, Strahlung inkohärent, zweistufig

Die oben angeführten Schweißverfahren können gegebenenfalls auch kombiniert werden wie zum Beispiel das Infrarotschweißen mit dem Vibrationsschweißen. Besonders bevorzugt erfolgt das Verschweißen des Polypropylen-Kunststoffs mit dem Polyethylen-Kunststoff durch ein Schweißverfahren ausgewählt aus Heizelementschweißen, Vibrationsschweißen, Wärmekontakt-oder Wärmeimpulsschweißen, Warmgas- oder Heissgasschweißen, Mikrowellen- oder Induktionsschweißen. Laserstumpf- oder Laserdurchstrahlschweißen, Infrarotschweißen, Ultraschallschweißen, sowie Kombinationen daraus, insbesondere ausgewählt aus Infrarotschweißen, Vibrationsschweißen, Heizelementschweißen, Ultraschallschweißen, sowie Kombinationen daraus. Besonders bevorzugt ist das Verschweißen mittels Infrarotschweißen und Ultraschallschweißen.

Besonders bevorzugt ist ein Verfahren zum stoffschlüssigen Fügen der zwei Kunststoffe unter Verwendung des Welding Agents, beinhaltend die folgenden Schritte.
- Bereitstellen des ersten flächigen Kunststoffbauteils aufweisend eine erste Fügezone auf der flächigen Seite,
- Bereitstellen des zweiten Kunststoffbauteils aufweisend eine zweite Fügezone,
- Auftragen des Welding Agents auf die zweite Fügezone, insbesondere bei lösungsmittelfreien Welding Agents,
- ggf. Aufschmelzen des Welding Agents und ggf. der Fügezonen, vorzugsweise mittels Infrarot-Strahlung
- In-Kontakt-bringen der mit dem Welding Agent versehenen zweiten Fügezone mit der ersten Fügezone, indem das zweite Kunststoffbauteil auf die Fläche des ersten Bauteils gebracht wird,
- Stoffschlüssiges Verbinden der ersten Fügezone mit der zweiten Fügezone, insbesondere durch den Einsatz üblicher Schweißverfahren von Kunststoffen wie beispielsweise dem Infrarotschweißen, Heizelementschweißen, Warmgasschweißen, Vibrationsschweißen, Ultraschallschweißen.

Vorteilhaft ist es, die Fügezone des zweiten Kunststoffes vorzuwärmen. Für das Vorwärmen können dem Fachmann bekannte und sich für den Einsatzzweck eignende Hilfsmittel und Techniken zum Einsatz kommen. Insbesondere eignet sich der Einsatz von Warmgas oder Plasma zur Vorwärmung. Denkbar ist auch eine Vorwärmung mittels Bestrahlung, insbesondere Infrarotstrahlung oder Laserstrahlung. Auch kann ein Heizelement oder ein beheiztes Werkzeug zum Einsatz kommen, um die Fügezone vorzuwärmen. Schließlich ist auch ein Vorwärmen in einem Ofen oder einem beheizten Raum denkbar. Denkbar ist eine Vorwärmung des gesamten Kunststoffes und somit auch besagter Fügezone. Alternativ oder zusätzlich ist aber auch eine Vorwärmung lediglich der Fügezone selbst möglich.

In einer vorteilhaften Weiterbildung liegt der Abstand der Heizvorrichtung während der Vorwärmung zum Kunststoff, insbesondere zur vorzuwärmenden ersten Fügezone, insbesondere des wärmeabgebenden Bereichs der Heizvorrichtung oder des wärmeauslösenden Bereichs der Heizvorrichtung oder der zur vorzuwärmenden wirksamen Oberfläche der Heizvorrichtung oder die hinsichtlich der ersten Fügezone gegenüberliegenden Bereich der Heizvorrichtung in einem Bereich von 0,5 mm bis 100 mm, vorzugsweise im Bereich von 1 mm bis 60 mm. Denkbar ist alternativ auch, dass eine Erwärmung durch und/oder bei Kontaktierung insbesondere der ersten Fügezone durch das Heizelement der Heizvorrichtung erfolgt.

Ein weiterer Vorteil ist die Auswahl des Kunststoffes für den ersten Fügepartner und die Einstellung der Verfahrensparameter auf den ersten Kunststoff derart, dass die erste Fügezone beim Vorwärmen aufgeschmolzen wird und dass beim Vorwärmen eine Schmelzeschicht in der ersten Fügezone erzeugt wird. Die Dicke der Schmelzeschicht liegt in einer bevorzugten Ausführungsform vorzugsweise im Bereich von 0,05 mm bis 6 mm, besonders bevorzugt im Bereich von 0,1 mm bis 5 mm. Eine derartige Schmelzeschicht kann zu einer besseren Adhäsion und/oder Diffusion und/oder Wechselwirkung der Moleküle führen und in Verbindung mit einem gewissen Fluss zu einer besseren Verbindungsschicht. Befindet sich die Grenzschicht des ersten Kunststoffs im schmelzeflüssigen Zustand, kann es mit dem Welding Agent zu Wechselwirkungen bis hin zu chemischen Bindungen kommen. Die Schmelzschicht kann insbesondere abhängig sein von der Bauteilgeometrie und der jeweiligen Bauteilauslegung. Vorzugsweise sind die Verfahrensparameter derart eingestellt und/oder gewählt, dass es zu keiner Verformung der Bauteile oder Abzeichnungen auf den Bauteilen kommt. Bevorzugt ist ein Ausgleich von Temperaturunterschieden zwischen der Fügezone und dem aufzutragenden Welding Agent durch geeignete Maßnahmen und/oder Verfahrensschritte vorgesehen. Dabei ist es insbesondere denkbar den Welding Agent vorzuwärmen, um den Temperaturunterschied zwischen dem vorzugsweise thermoplastischen Welding Agent und der ersten Fügezone zu reduzieren. Dies kann beispielsweise der schnellen Abkühlung der ersten Fügezone zwischen den Prozessschritten entgegenwirken.

Optional erfolgt vorzugsweise vor dem Schritt des Vorwärmens der ersten Fügezone eine Vorbehandlung der ersten Fügezone. Alternativ oder zusätzlich kann auch eine Vorbehandlung der zweiten Fügezone erfolgen. Als mögliche Vorbehandlung ist beispielsweise das Reinigen mittels eines Lösungsmittels oder eines beispielsweise alkalischen Kunststoffreinigers denkbar. Auch kann eine mechanische Vorbehandlung zum Einsatz kommen, insbesondere mittels Kratzen, Schmirgeln, Bürsten oder Strahlen. Denkbare chemische Vorbehandlungen sind insbesondere das Beizen oder der Einsatz reaktiver Gase. Darüber hinaus könnte sich der Einsatz einer thermischen, chemischen oder/und physikalischen Vorbehandlung als zweckmäßig erweisen, insbesondere mittels Gasflamme oder Plasmabogen. Alternativ oder zusätzlich kann eine elektrische Vorbehandlung mittels Corona-entladung, bei der die erste Fügezone und/oder die zweite Fügezone einer elektrischen Corona-entladung ausgesetzt wird damit an der entsprechenden Oberfläche polare Moleküle entstehen. Eine weitere Möglichkeit ist die Plasmabehandlung, vorzugsweise unter Einsatz einer Plasmadüse für die Vorbehandlung der Fügezone, insbesondere um eine Aktivierung und/oder Reinigung der entsprechenden Oberfläche zu erreichen. Gleichwohl kann sich auch eine Beschichtung mittels Plasma als zweckmäßig erweisen. Eine weitere Möglichkeit ist das Beflammen der Fügezone zur Erhöhung der Oberflächenspannung bei geeigneten Kunststoffen. Eine weitere Art der Vorbehandlung ist die Bestrahlung mittels UV-Strahlen, Elektronenstrahlen, radioaktiven Strahlen oder mittels Laser. Schließlich kann die Vorbehandlung in Form einer Beschichtung erfolgen, insbesondere durch einen Anstrich oder einen Haftvermittler. Denkbar ist auch eine Vorbehandlung des ersten Kunststoffes oder der Fügezonen des ersten Kunststoffes in einem größeren zeitlichen Abstand vor dem Vorwärmen. So ist beispielsweise denkbar, die Vorbehandlung schon im Rahmen des Fertigungsprozesses des ersten Kunststoffes vorzunehmen, um im erfindungsgemäßen Verfahren den vorbehandelten Kunststoff weiterverarbeiten zu können.

Der Auftrag des Welding Agents ist auf unterschiedliche Art und Weise denkbar. Beispielsweise und insbesondere im industriellen Bereich ist der Auftrag mittels einer automatisierten Auftragshilfe, insbesondere mittels eines Dosierroboters denkbar. Selbiger kann dabei mit einer Nadel und/oder einem Höhensensor und/oder optischer Abstandsmessung ausgerüstet sein, um komplexe Dosierungen durchführen zu können. Auch kann der Auftrag des Welding Agents mittels Spritzgießen erfolgen, indem der Welding Agent in einer Spritzgießmaschine plastifiziert und in die der erste Kunststoff mit der ersten Fügezone enthaltende Form unter Druck eingespritzt wird. Alternativ ist ein Folienauftrag denkbar, wobei in einem ersten Schritt mittels Folienblasen oder Flachfolienextrusion zunächst eine Folie aus dem Welding Agent hergestellt wird. Anschließend kann die Folie beispielsweise mittels eines Schneid- oder Stanzverfahrens in eine beliebige Form zugeschnitten und in einem weiteren Schritt nach dem genannten Vorwärmen auf die erste Fügezone aufgebracht werden. Hierbei hat sich der Einsatz von Folien/Platten mit einer Stärke im Bereich von 1 µm - 10000 µm als zweckmäßig erwiesen. Weitere denkbare Auftragsmöglichkeiten sind das Extrusionsschweißen, bei dem der Welding Agent in Form eines Schweißdrahtes vorliegt oder in einem Extruder aufgeschmolzen und in Schmelze auf die erste Fügezone appliziert werden kann. Auch ist die Bereitstellung des Welding Agents in Form eines Schweißdrahtes möglich, um eine Applikation mittels Heißluftschweißen zu ermöglichen. Eine weitere Möglichkeit ist das Aufbringen des Welding Agents mittels eines Sprühverfahrens. Auch beim Aufbringen beim Spritzguss ist eine Vorbehandlung oder/und Vorwärmung und/oder lokal unterschiedliche Temperierung des Spritzgießwerkzeug möglich. Selbstverständlich sind auch andere, dem Fachmann bekannte und sich für den spezifischen Anwendungsfall eignende Auftragsarten denkbar.

Ein weiterer Vorteil ist die weitere Erwärmung oder Erwärmung der ersten Fügezone während des Auftrags des Welding Agents, insbesondere um einen Temperaturabfall der ersten Fügezone zwischen dem Vorwärmen und dem Auftragen des Welding Agents zu vermeiden. Dies kann durch den oben beschriebenen Verfahrensschritt zum Vorwärmen erfolgen, welcher der Einfachheit halber während des Auftrags fortgeführt werden kann. Alternativ oder zusätzlich ist eine zusätzliche Erwärmung insbesondere mittels eines weiteren Verfahrensschrittes möglich. So kann sich beispielsweise als zweckmäßig erweisen, ein simultanes Erwärmen der ersten Fügezone durchzuführen, beispielsweise mittels simultanen Bestrahlens der ersten Fügezone mit Strahlung, erzwungene Konvektion, Kontakterwärmung während des Auftrages, um einen Temperaturabfall der ersten Fügezone nach dem Vorwärmen zu vermeiden.

In einer vorteilhaften Weiterbildung wird der Welding Agent derart aufgebracht, dass eine Verbindungsschicht mit einer Dicke im Bereich von 1 µm bis 5 mm, vorzugsweise im Bereich von 10 µm bis 3 mm auf der Fügezone angeordnet ist. Unter der Dicke der Verbindungsschicht ist dabei die Materialdicke der Verbindungsschicht auf der ersten Fügezone zu verstehen.

Ein weiterer Vorteil ist das Auftragen des Welding Agents mittels einer Dosiervorrichtung auf die Fügezone unter Relativbewegung zwischen Fügezone und der Dosiervorrichtung, wobei mittels einer Heizvorrichtung die Fügezone, auf welche der Welding Agent aufgetragen wird, unter Relativbewegung zwischen Fügezone und Heizvorrichtung, vor dem Auftrag des Welding Agents vorgewärmt wird, wobei der Auftrag des Welding Agents über die Dosiervorrichtung im vorgewärmten Zustand der Fügezone erfolgt.

Hierbei hat es sich als besonders vorteilhaft erwiesen, dass die Heizvorrichtung bei der Vorwärmung an der ersten Fügezone mit einer Geschwindigkeit im Bereich von 10 mm/min bis 100 m/min, vorzugsweise im Bereich von 10 mm/min bis 30 m/min vorbeigeführt wird.

Ferner kann es von Vorteil sein, dass die Heizvorrichtung der Dosiervorrichtung vorzugsweise in einem definierten und konstanten Abstand voreilt. Insbesondere ist eine derartige Durchführung des Verfahrens von Vorteil, bei der der Welding Agent mittels einer Dosiervorrichtung auf die erste Fügezone unter Relativbewegung von Dosiervorrichtung und erster Fügezone im Bereich von 10 mm/min bis 100 m/min, vorzugsweise im Bereich von 10 mm/min bis 30 m/min aufgetragen wird, wobei mittels einer Heizvorrichtung besagte Fügezone, auf welche der Welding Agent aufgetragen wird, unter Relativbewegung von Heizvorrichtung und erster Fügezone vor dem Auftrag des Welding Agents vorgewärmt wird, wobei die Heizvorrichtung der Dosiervorrichtung oder einer Düse der Dosiervorrichtung zum Auftragen des Welding Agents in einem zeitlichen Abstand im Bereich von 0,1-10 s vorzugsweise simultan voreilt.

Hierbei hat es sich als besonders vorteilhaft erwiesen, eine Beschichtungseinheit bestehend aus Dosiervorrichtung und Heizvorrichtung einzusetzen. Unter einer Beschichtungseinheit kann dabei insbesondere eine Einheit verstanden werden, die eine feste Verbindung von Heizvorrichtung und Dosiervorrichtung vorsieht, so dass die Heizvorrichtung der Dosiervorrichtung in vorzugsweise einem definierten und konstanten Abstand bei der Relativbewegung voreilt, um sicherzustellen, dass die erste Fügezone unmittelbar vor dem Auftrag des Welding Agents vorgewärmt wird. Selbstverständlich ist hierbei auch eine Einstellbarkeit des Abstandes oder bei konvektiver Vorwärmung das Einstellen des Volumenstroms bzw. Düsendurchmessers des Mediums, insbesondere durch geeignete mechanische, elektromechanische oder auch pneumatisch betriebene Stellmittel denkbar.

Andererseits kann unter der Beschichtungseinheit auch eine Heizvorrichtung und eine Dosiervorrichtung als zwei völlig voneinander getrennte oder separierte Baugruppen verstanden werden, die jedoch die gleiche oder im Wesentlichen die gleiche Relativbewegung hinsichtlich des Kunststoffes eingehen, um sicherzustellen, dass der Auftragsort des Welding Agents unmittelbar vor dem Auftrag des Welding Agents vorgewärmt wird.

In einer vorteilhaften Weiterbildung gehen Heizvorrichtung und Dosiervorrichtung eine zwar im Wesentlichen gleiche primäre Relativbewegung oder Grundrichtung hinsichtlich des Kunststoffes ein, jedoch erfährt zumindest eine von beiden genannten Vorrichtungen zusätzlich zur besagten primären Relativbewegung eine zusätzliche Relativbewegung hinsichtlich des Kunststoffes. So kann beispielsweise die Heizvorrichtung und/oder die Dosiervorrichtung neben der primären Relativbewegung, in der beispielsweise auch der Auftrag des Welding Agents erfolgen kann, eine oder mehrere sekundäre Relativbewegungen eingehen. Beispielsweise kann insbesondere die Heizvorrichtung und/oder die Dosiervorrichtung eine um die primäre Relativbewegung kreisende oder mäanderförmige sekundäre Relativbewegung eingehen oder erfahren.

Dabei kann der Kunststoff auf der einen Seite oder die Heizvorrichtung und Dosiervorrichtung oder beide Vorrichtungen zusammen als Beschichtungseinheit auf der anderen Seite bewegt werden. Dabei ist es möglich, dass die Heizvorrichtung und Dosiervorrichtung oder beide Vorrichtungen zusammen als Beschichtungseinheit auf der einen Seite bzw. der Kunststoff auf der anderen Seite stillstehen oder jeweils mit dem sich bewegenden Teil in abweichende Richtung bewegt werden.

In einer vorteilhaften Weiterbildung erfolgt eine primäre Relativbewegung in einer Geschwindigkeit in einem Bereich von 10 mm/min bis 100 m/min, vorzugsweise im Bereich von 10 mm/min bis 30 m/min, so dass beispielsweise insbesondere auch durch geeignete Gestaltung der Heizvorrichtung möglichst kurze Verweilzeiten des Kunststoffes innerhalb der Heizfläche der Heizvorrichtung ergeben, insbesondere in einem Bereich von 1-60 s. Hierunter kann der Bereich bzw. der Raum um die Heizvorrichtung verstanden werden, der einen Einfluss auf die Temperatur im Sinne einer Temperaturerhöhung, also einer Vorwärmung der ersten Fügezone des ersten Kunststoffes hat. So kann beispielsweise eine zu große Aufheizung und eine Kunststoffschädigung oder Kunststoffbeeinträchtigung vermieden werden.

Zudem kann es sich als vorteilhaft erweisen, insbesondere zur Anbindung der Dosiervorrichtung und/oder der Heizvorrichtung an/in bestehende Fertigungslinien, die Heizvorrichtung mit einer Busschnittstelle auszustatten, insbesondere eines Profibus, oder einer Realtime-Ethernet-Schnittstelle.

Nach dem Aufbringen besagten Welding Agents ist vorgesehen, die zweite Fügezone mit der Welding Agentschicht in Kontakt zu bringen. Hierbei kann sich eine Fixierung beider Kunststoffe zueinander als zweckmäßig erweisen, insbesondere mittels dem Fachmann bekannter Spannvorrichtungen oder ähnlicher Hilfsmittel zur Fixierung.

Natürlich kann optional vor dem Schritt des In-Kontakt-Bringens der zweiten Fügezone mit der Welding Agentschicht eine Vorbehandlung der zweiten Fügezone erfolgen. Dabei sind insbesondere alle oberhalb beschriebenen Techniken für eine Vorbehandlung denkbar. Denkbar ist auch eine Vorbehandlung des zweiten Kunststoffes oder der Fügezonen des zweiten Kunststoffes in einem größeren zeitlichen Abstand vor dem In-Kontakt-Bringen. So ist beispielsweise denkbar, die Vorbehandlung schon im Rahmen des Fertigungsprozesses des zweiten Kunststoffes vorzunehmen, um im erfindungsgemäßen Verfahren einen vorbehandelten Kunststoff weiterverarbeiten zu können. Die Vorbehandlung des zweiten Kunststoffes kann auch den Auftrag des Welding Agents auf die zweite Fügezone beinhalten. Dabei ist vorzugsweise auch eine Vorwärmung der zweiten Fügezone vor dem Auftrag des Welding Agents denkbar. Die obigen Ausführungen sind an dieser Stelle ebenfalls bevorzugt.

Es schließt sich an das oberhalb beschriebene In-Kontankt-bringen von zweiter Fügezone und Welding Agent ein Fügeprozess an, in dem die behandelten und/oder beschichteten Fügepartner durch Wärmezufuhr plastifiziert und vorzugsweise unter Einwirkung von Druck miteinander stoffschlüssig verbunden werden. Denkbar ist für diese stoffschlüssige Verbindung der zweiten Fügezone mit dem Welding Agent der Einsatz einer Wärmezufuhr mittels Wärmeleitung, beispielsweise mittels Heizelementschweissen und/oder Wärmekontaktschweißen und/oder Wärmeimpulsschweißen; durch Reibung, insbesondere Ultraschall-, Reib-/Vibrations- oder Hochfrequenzschweissen; Mikrowellen- oder Induktionsschweißen; durch Konvektion, wie beispielsweise Warmgas- oder Heissgasschweissen; mittels Strahlung, beispielsweise Infrarot-, Laserstumpf- oder Laserdurchstrahlschweissen oder auch durch Kombination zweier oder mehrerer dieser Techniken.

Ein weiterer Gegenstand dieser Erfindung sind gemäß dem erfindungsgemäßen Verfahren hergestellte Gegenstände bzw. Produkte.

Außerdem ist Gegenstand dieser Erfindung die Verwendung des beschriebenen Verfahrens zur Herstellung aller Bauteile mit einer sichtbaren Oberfläche, bevorzugt zur Herstellung eines Armaturenbrettes oder einer Türverkleidung, insbesondere mit einer Airbagvorrichtung, und/oder zur Herstellung einer Stoßstange oder eines Heckspoilers mit einer Sensorhalterung. Dabei können die Bauteile auch oberflächenveredelt sein, wie z.B. verchromt, lackiert, mit Stoff oder Leder kaschiert oder beflockt.

### Ausführunqsbeispiele

Der Welding Agent 1 enthält 67 Gew-% einer Mischung von zwei thermomechanisch degradierten Polypropylencopolymern (ein Copolymer mit einer Schmelzenthalpie von 65 J/g und ein Copolymer mit einer Schmelzenthalpie von 28 J/g), 28 Gew.-% eines hydrierten Polycyclopentadienharzes und 5 Gew.-% eines modifizierten Polypropylen-Waches.

Der Welding Agent 2 enthält zu 80 Gew.-% den Welding Agent 1 und zusätzlich 20 Gew.-% eines lineraren SEBS-Copolymers.

Es werden zwei Polypropylen-Kunststoff-Platten mittels IR-Schweißen in einem 90° Winkel miteinander verbunden. Dabei wird die Verschweißung sowohl mit als auch ohne Welding Agent durchgeführt. Dabei werden die Welding Agents in Form einer 0,5 mm dicken Folie verwendet.

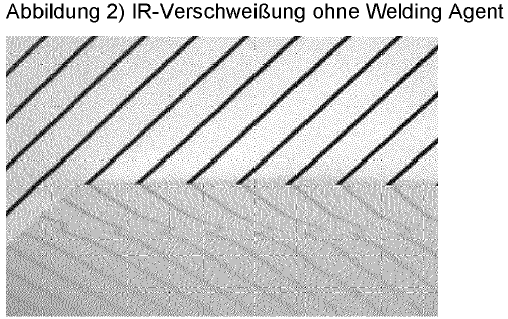

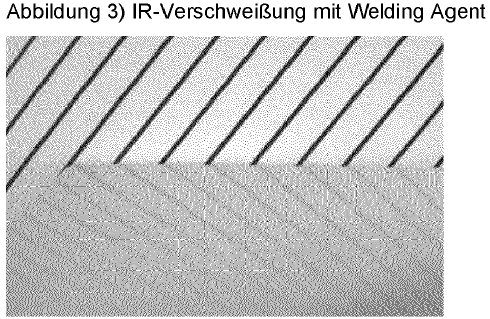

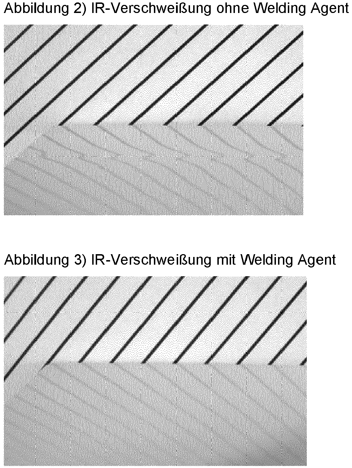

Bei der Verschweißung ohne Welding Agent zeigt sich auf der Rückseite der verschweißten Platte genau gegenüber der Schweißnaht ein deutlicher Abdruck. In Abbildung 2 wird dieser Abdruck durch die Spiegelung von schwarzen Linien auf den Kunststoffplatte verdeutlicht. In der Mitte der Platte, auf dessen Unterseite die weitere Kunststoffplatte im 90° Winkel in Längsrichtung angeschweißt ist, ist deutlich eine Verzerrung der gespiegelten Linien zu erkennen. Wenn bei der Verschweißung die Welding Agents 1 und 2 eingesetzt werden, entsteht kein Abdruck. Dies ist auch in Abbildung 3 zu erkennen, wo eine mittels Welding Agents verschweißte Platte gezeigt wird und die gespiegelten Linien nicht verzerrt sind.

Durch die Verwendung der Welding Agents 1 und 2 konnte im vorliegenden Fall der Abdruckeffekt gänzlich behoben werden.

Des Weiteren haben Biege- und Zugversuche gezeigt, dass die Schweißnähte, die mit dem Welding Agents verschweißt werden, sehr gut mechanische Eigenschaften aufweisen. Die mittels Welding Agent 2 hergestellten Schweißnähte zeigen vor allem bei tiefen Temperaturen im Bereich von -20 bis -40 °C hervorragende Eigenschaften.

## Patentansprüche

1. Verfahren zum Verschweißen von zwei Kunststoffbauteilen, wobei ein erstes flächiges Kunststoffbauteil auf einer der flächigen Seiten mit einem zweiten Kunststoffbauteil unter Verwendung eines Welding Agents verschweißt wird, wobei der Welding Agent mindestens ein Polymer enthält, welches keinen höheren Schmelzpunkt als die zu verschweißenden Kunststoffbauteile aufweist.

2. Verfahren zum Verschweißen nach Anspruch 1, **dadurch gekennzeichnet, dass** beide Kunststoffbaueile aus Polyolefin-Kunststoffen, insbesondere Polyethylen- und/oder Polypropylen-Kunststoffen, bevorzugt Polypropylen-Kunststoffen sind.

3. Verfahren zum Verschweißen nach Anspruch 1 oder 2, **dadurch gekennzeichnet, dass** der Welding Agent einen Schmelzpunkt im Bereich von 100 bis 200 °C, insbesondere 120 bis 170 °C hat.

4. Verfahren zum Verschweißen nach einem der Ansprüche 1 bis 3, **dadurch gekennzeichnet, dass** der Welding Agent eine geringere Schmelzenthalpie aufweist als die zu verschweißenden Kunststoffe, insbesondere die Schmelzenthalpie des Welding Agents, bevorzugt aller eingesetzten Polymere im Welding Agent zusammen, kleiner als 100 J/g ist.

5. Verfahren zum Verschweißen nach einem der Ansprüche 1 bis 4, **dadurch gekennzeichnet, dass** der Welding Agent eine Schmelzviskosität bei 200 °C von 1000 bis 200000 Pas, insbesondere 5000 bis 100000 Pas, bevorzugt 10000 bis 65000 Pas aufweist.

6. Verfahren zum Verschweißen nach einem der Ansprüche 1 bis 5, **dadurch gekennzeichnet, dass** der Welding Agent mindestens ein thermomechanisch degradiertes Copolymer, insbesondere ein thermomechanisch degradiertes Polyethylen- oder Polypropylencopolymer, bevorzugt ein thermomechanisch degradiertes Polypropylencopolymer enthält.

7. Verfahren zum Verschweißen nach Anspruche 6, **dadurch gekennzeichnet, dass** der Welding Agent umfasst, bezogen auf die Gesamtmenge des Welding Agents, 10 bis 80 Gew.-%, vorzugsweise 20 bis 70 Gew.-% und besonders bevorzugt 30 bis 60 Gew.-% mindestens eines thermomechanisch degradierten Copolymers umfasst.

8. Verfahren zum Verschweißen nach einem der Ansprüche 1 bis 7, **dadurch gekennzeichnet, dass** der Welding Agent mindestens ein klebrigmachendes Harz enthält.

9. Verfahren zum Verschweißen nach einem der Ansprüche 1 bis 8, **dadurch gekennzeichnet, dass** der Welding Agent mindestens ein thermoplastisches Elastomer, insbesondere Styrol-Block-Copolymers enthält.

10. Verfahren zum Verschweißen nach einem der Ansprüche 1 bis 9, **dadurch gekennzeichnet, dass** das erste flächige Kunststoffbauteil eine Dicke von kleiner 10 mm, insbesondere kleiner 5 mm, bevorzugt kleiner 3 mm aufweist.

11. Verfahren zum Verschweißen nach einem der Ansprüche 1 bis 10, **dadurch gekennzeichnet, dass** das zweite Bauteil in einem Winkel von 45 bis 135 ° auf die Fläche des ersten Bauteils aufgebracht wird.

12. Gegenstand hergestellt nach einem Verfahren zum Verschweißen gemäß einem der Ansprüche 1-11.

13. Verwendung eines Verfahrens gemäß einem der Ansprüche 1-11 zur Herstellung eines Armaturenbrettes, insbesondere mit einer Airbagvorrichtung, und/oder zur Herstellung eine Stoßstange oder eines Heckspoilers mit einer Sensorhalterung und oder zur Herstellung eines Heckspoilers.
